# EUROPÄISCHE PATENTSCHRIFT

(11) **EP 0 939 983 B1**
(45) Veröffentlichungstag und Bekanntmachung des Hinweises auf die Patenterteilung: **14.02.2001**
(21) Anmeldenummer: 97948889.7
(22) Anmeldetag: 06.11.1997
(51) Int. Cl.: H02B 1/30, H02B 1/32

(54) **SCHALTSCHRANK MIT EINER MONTAGEEINHEIT**
SWITCH CABINET WITH AN ASSEMBLY UNIT
ARMOIRE DE DISTRIBUTION COMPORTANT UNE UNITE DE MONTAGE

(30) Priorität: 19.11.1996 DE 19647753
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: NICOLAI, Walter, D-35418 Buseck (DE)
(74) Vertreter: Fleck, Hermann-Josef, Dr.-Ing.
(86) Internationale Anmeldenummer: EP9706142
(87) Internationale Veröffentlichungsnummer: WO9823004

(56) Entgegenhaltungen:
- CH-A- 285 914
- DE-A- 1 938 879
- DE-A- 2 746 545
- DE-C- 19 503 289
- FR-A- 2 551 303
- GB-A- 2 231 117

## Beschreibung

Die Erfindung betrifft einen Schaltschrank mit einem Rahmengestell, das vertikale Rahmenschenkel aufweist, wobei die vertikalen Rahmenschenkel an eine Boden- bzw. Deckeinheit angeschlossen sind.

Ein derartiger Schaltschrank ist aus der FR-A- 2 551 303 bekannt.

In den Schaltschränken werden elektronische Bauelemente oder Baugruppen festgelegt. Zur Anbringung dieser Teile ist eine Montageplatte verwendet. Die Montageplatte ist parallel zu einer Rückwand des Schaltschrankes gestellt und an der Boden- bzw. der Deckeinheit festgemacht.

Ein solcher Schaltschrank ist beispielsweise aus der DE 41 40 0721 A1 bekannt. An der Bodeneinheit sind hierbei Stege angeformt. Die Stege verlaufen in Richtung der Schaltschranktiefe und dienen zur Aufnahme von Gleitstücken aus Kunststoff. Die Gleitstücke tragen die Montageplatte. Die Montageplatte kann außerhalb des Schaltschrankes bestückt und anschließend verdrahtet werden. Dann wird die Montageplatte mit ihren Gleitstücken durch die offene Vorderseite des Schaltschrankes hindurch auf die Stege aufgesetzt. Auf den Stegen wird die Montageplatte in den Innenraum des Gestellrahmens eingeschoben, bis sie ihre Montageposition erreicht. Um den Innenraum des Schaltschrankes noch für weitere Einbauten zu nutzen, wird die Montageplatte in der überwiegenden Zahl der Einsatzfälle direkt vor der Rückwand des Schaltschrankes positioniert. Für die Bereitstellung der Montageplatte und der Stege, auf denen die Gleitstücke geführt sind, ist ein erheblicher Teile- und Montageaufwand notwendig.

Die DE-A-2 746 545 beschreibt keinen Schaltschrank, sondern lediglich ein Schaltgerüst, wobei an den vertikalen Holmen horizontale Montageschienen zur Befestigung von Schaltungselementen festgemacht werden können.

Es ist Aufgabe der Erfindung einen Schaltschrank der eingangs erwähnten Art zu schaffen, bei dem der Einbau von elektronischen Komponenten mit geringem Aufwand einfach möglich ist.

Diese Aufgabe der Erfindung wird dadurch gelöst, daß zwei benachbarte vertikale Rahmenschenkel mit Verbindungsstücken zu einer separaten Montageeinheit verbunden und die Einbauten hieran festlegbar sind.

Die vertikalen Rahmenschenkel - als Teil des Gestellrahmens - werden für den Aufbau der Montageeinheit genutzt. Mit den Verbindungsstücken wird die Montageeinheit als Baugruppe vormontiert. Sie kann dann außerhalb des Rahmengestelles bestückt und verdrahtet werden. Anschließend kann mit der Montageein-heit das Rahmengestell komplettiert werden. Hierbei ist es denkbar, daß ein Teil-Rahmengestell als selbständig stellfähige Einheit vorgefertigt ist, an die die Montageeinheit angebaut wird. Es ist jedoch auch möglich, die Montageeinheit als Grundkörper zu verwenden an den dann die restlichen Teile des Rahmengestelles angeschlossen werden. Bei der Erfindung macht man sich die Erkenntnis zu nutze, daß in der überwiegenden Zahl der Anwendungsfälle ein Einbau der elektronischen Bauteile dicht an der Seitenwand oder der Rückwand erfolgen soll. Dieser Anforderung ist dadurch, daß der seitliche und/oder der rückwärtige Teil des Rahmengestelles direkt als Montageeinheit dient, entsprochen. Der Aufwand hierfür ist sehr gering, da bereits vorhandene Elemente des Rahmengestells für die Montageeinheit genutzt werden. Dadurch, daß die Montageeinheit direkt an einer Rückwand oder einem Seitenteil angeordnet ist, ist der Platzbedarf gering. Der Innenraum des Schaltschrankes verbleibt zur freien Verfügung.

Nach einer Ausgestaltung der Erfindung ist es vorgesehen, daß die vertikalen Rahmenschenkel Befestigungsaufnahmen aufweisen, mittels derer sie über Eckverbinder an die Boden- bzw. Deckeinheit angeschlossen sind. Dadurch, daß die vertikalen Rahmenschenkel direkt die Befestigungsaufnahmen bilden, ist der Teileaufwand gering gehalten. Es müssen keine zusätzlichen Verbindungselemente zur Anbringung der Montageeinheit verwendet werden.

Ist es vorgesehen, daß die Verbindungsstücke als Montageschienen ausgebildet sind, daß die Montageschienen eine dem Innenraum des Rahmengestells zugekehrte Montagefläche aufweisen, daß an die Montagefläche ein oder mehrere Seitenteile im Winkel angeschlossen sind, und daß die Montagefläche und die Seitenteile Reihen von Befestigungsaufnahmen aufweisen, dann können die Verbindungsstücke direkt zur Anbringung von Einbauten genutzt werden. Die Einbauten können hierbei an den Reihen von Befestigungsaufnahmen fixiert werden.

Eine einfache Anbringung der Montageeinheit an der Boden- und der Deckeinheit ist dann möglich, wenn diese zur Außenseite des Rahmengestells hin offene Aufnahmen aufweisen, in die die aus vertikalen Rahmenschenkeln und Verbindungsstücken gebildete Einheit einsetzbar ist.

Hierbei ist es vorteilhaft, wenn vorgesehen ist, daß die Aufnahmen im Eckbereich der Boden- und/oder der Deckeinheit angeordnet sind und die Enden der vertikalen Rahmenschenkel aufnehmen, daß die Aufnahmen Anschläge aufweisen, die die Einsetzbewegung der vertikalen Rahmenschenkel begrenzen, und daß die Einsetzbewegung an Führungen der Boden-/Deckeinheit und/oder der vertikalen Rahmenschenkel geleitet ist. Über die Führungen kann auch eine bestückte und damit schwere Montageeinheit leicht in die Aufnahmen eingesetzt werden. Die Anschläge legen die Montageeinheit in der Bestimmungsposition fest. Sie kann dann mit Befestigungselementen mit der Boden- und der Deckeinheit dauerhaft verbunden werden.

Ist es vorgesehen, daß von der Boden- und/oder der Deckeinheit ein Vorsprung gebildet ist, der die Stirnseite des vertikalen Rahmenschenkels zumindest teilweise überdeckt, dann ist der vertikale Rahmenschenkel auch an seinen beiden Enden geführt und in der Aufnahme sicher festgelegt.

Eine bevorzugte Ausgestaltung der Erfindung sieht vor, daß die vertikalen Rahmenschenkel eine dem Innenraum des Rahmengestells zugekehrte, in Längsrichtung verlaufende Nut aufweisen, daß in der Nut der Eckverbinder aufgenommen ist und daß die vertikalen Rahmenschenkel mit dem Eckverbinder lösbar oder unlösbar verbindbar sind. Zur lösbaren Verbindung ist es denkbar, daß die vertikalen Rahmenschenkel direkt mit dem Eckverbinder verschraubt sind. Zur unlösbaren Verbindung kann eine Schweißung vorgesehen sein. Der Eckverbinder dient zum einen zur Anbindung der vertikalen Rahmenschenkel an die Boden- und die Deckeinheit. Zum anderen kann er, je nachdem wie weit er in die Nut ragt, als Aussteifungselement dienen.

Eine mögliche Erfindungsvariante ist dadurch gekennzeichnet, daß die Montageeinheit ein oder mehrere Verkleidungselemente zur Abdeckung der rückwärtigen Seite der Montageeinheit bzw. des Innenraumes des Gestellrahmens trägt. Das Verkleidungselement kann als flache Platte rückseitig an den vertikalen Rahmenschenkeln anliegen. Es ist jedoch auch denkbar, daß das Verkleidungselement ausgebaucht ist, so daß ein Installations- oder Kabelraum geschaffen ist.

Eine Vielzahl von Befestigungsmöglichkeiten an der Montageeinheit wird auf einfache Weise dann geschaffen wenn vorgesehen ist, daß die vertikalen Rahmenschenkel paarweise Profilseiten aufweisen, mit denen zwei oder mehrere zueinander parallele Montageebenen ausgebildet sind.

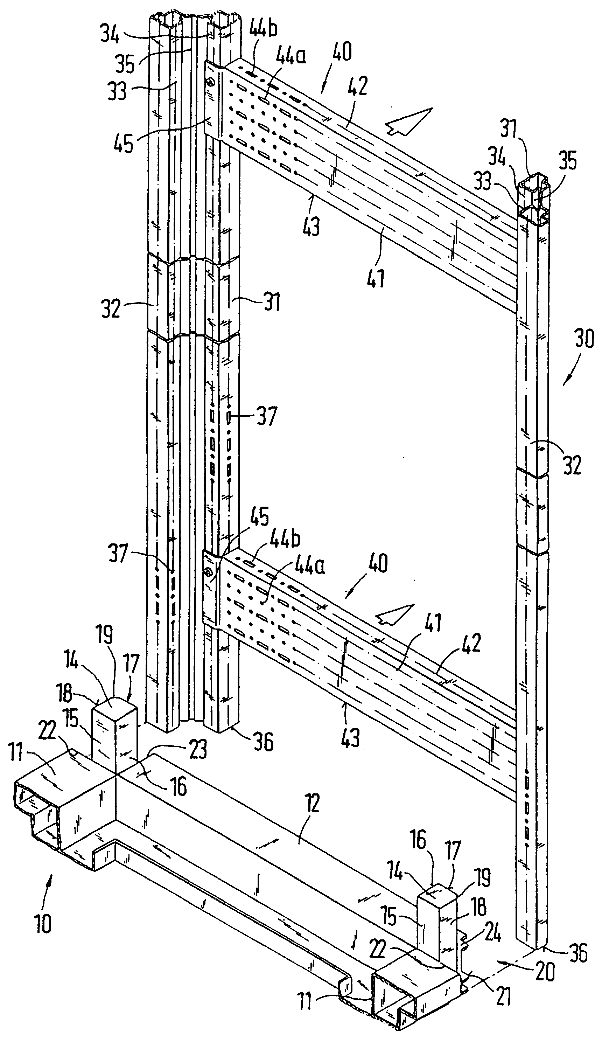

Die Erfindung wird im folgenden anhand eines in der Zeichnung dargestellten Ausführungsbeispiels näher erläutert. Die Zeichnung zeigt in perspektivischer Teildarstellung eine Bodeneinheit 10 eines Rahmengestelles für einen Schaltschrank und eine vertikale Montageeinheit.

Die Bodeneinheit 10 ist aus horizontalen Tiefen- und Längsstreben 11 und 12 aufgebaut. Diese sind querschnittsgleich ausgebildet und an ihren Enden miteinander verbunden, so daß sich ein geschlossener Rahmen ergibt. In den Eckbereichen der Bodeneinheit 10 sind nach außen offene Aufnahmen 20 gebildet, in die Eckverbinder 14 eingstellt sind. Die Eckverbinder 14 sind als quaderförmige Körper ausgebildet, die auf einem als Bodenfläche ausgebildeten, plattenförmigen Vorsprung 24 aufgestellt sind. Der plattenförmige Vorsprung 24 ist einstückig mit der Bodeneinheit 10 verbunden. Der Eckverbinder 14 bildet an seinen beiden, den Längs- und Tiefenstreben 11 und 12 zugeordneten Seiten Anlageflächen 15 und 16 aus. Mit diesen Anlageflächen 15 und 16 ist er bündig an die Stirnseiten der Längs- und Tiefenstreben 11 und 12 angesetzt. Der Eckverbinder 14 ist mit der Bodeneinheit 10 verschweißt. Hierbei werden Schweißnähte entlang der Anlageflächen 15 und 16 sowie im Bereich des Vorsprunges 24 der Bodeneinheit 10 geführt. Es ist jedoch auch denkbar, daß der Eckverbinder 14 mit der Bodeneinheit 10 verschraubt und damit aus-wechselbar ist. Die beiden den Anlageflächen 15 und 16 abgekehrten Seiten des Eckverbinders 14 sind als Führungen 17 und 18 ausgebildet. Diese Füh-rungen 17 und 18 dienen zur Aufnahme der Montageeinheit. Die Montageein-heit ist im wesentichen aus zwei vertikalen Rahmenschenkeln 30 und diese verbindende Verbindungsstücke 40 gebildet.

Die Rahmenschenkel 30 sind als geschlossene Hohlprofile ausgebildet, die eine zur Innenseite des Rahmengestelles hin gerichtete Befestigungsaufnahme 35 aufweisen. Die Befestigungsaufnahme 35 ist als hinterschnittene Schwalbenschwanznut ausgebildet. Seitlich schließen sich an die Befestigungsaufnahme 35 Zentriervorrichtungen 33, 34 auf. Die Zentriervorrichtungen 33, 34 stehen zueinander rechtwinklig und sind mit Reihen von Befestigungsaufnahmen 37 versehen. Die Befestigungsaufnahmen 37 sind in gleicher Teilung zueinander beabstandet angeordnet. Hierbei ist wechselweise eine Schlitz- und eine Lochaufnahme vorgesehen. Die beiden Führungen 33, 34 gehen in Profilseiten 31, 32 über. Die Profilseiten 31, 32 stehen vertikal zu den zugeordneten Außenseiten des Rahmengestelles. Die beiden Verbindungsstücke 40 sind vorliegend als Montageschienen ausgebildet. Diese Montageschienen sind im Querschnitt U-förmig aus einer Montagefläche 41 und zwei daran angschlossenen Seitenteilen 42, 43 gebildet. Die Seitenteile 42, 43 stehen zueinander parallel. Die Montagefläche 41 ist dem Innenraum des Rahmengestelles zugekehrt. Seitlich ist an die Montagefläche 41 jeweils stirnseitig ein Befestigungsabschnitt 45 angeschlossen. Der Befestigungsabschnitt 45 ist als Lappen ausgebildet, der die zugeordnete Zentriervorrichtung 34 teilweise überdeckt. Wie in der Zeichnung angedeutet ist, kann über den Befestigungsabschnitt 45 das Verbindungsstück 40 mit den vertikalen Rahmenschenkeln 30 verschraubt werden. An den Verbindungsstücken 40 können elektronische Baueinheiten festgelegt werden. Hierzu sind in die Montagefläche 41 und die Seitenteile 42, 43 Befestigungsaufnahmen 44 a, 44 b eingebracht. Die Befestigungsaufnahmen 44 a, 44 b sind in Linien angeordnet und weisen zueinander einen gleichmäßigen Teilungsabstand auf. Der Teilungsabstand ist abgestimmt auf den Teilungsabstand der Befestigungsaufnahme 37 der vertikalen Rahmenschenkel 30 gewählt. Bei der in der Zeichnung dargestellten Montageeinheit sind im oberen und im unteren Bereich der vertikalen Rahmenschenkel 30 Verbindungsstücke 40 vorgesehen. Es können jedoch auch mehr als zwei Verbindungsstücke 40 eingesetzt sein, um die Montageeinheit zu bilden. Insbesondere können auch Kreuzstreben verwendet werden, die schräg zwischen den beiden vertikalen Rahmenschenkeln 30 eingesetzt sind. Zum Anbau der Montageeinheit an die Bodeneinheit 10 wird diese in ihrer vertikalen Stellposition in die Aufnahme 20 eingschoben. Hierbei werden zunächst die vertikalen Rahmenschenkel 30 mit ihren Stirnseiten 36 auf den Vorsprung 24 der Bodeneinheit 10 aufgesetzt. Anschließend wird die komplette Montageeinheit entgegen der in der Zeichnung dargestellten Pfeile in die Aufnahme 20 eingeschoben. Die Zentriervorrichtungen 33 der vertikalen Rahmenschenkel 30 gleiten dabei entlang der Führungen 18 des Eckverbinders 14.

Die Einsetzbewegung ist mit den Profilseiten 32 begrenzt. Diese kommen an den Stirnseiten der Tiefenstreben 11, die als Anschläge 22 ausgebildet sind, zum liegen. Gleichzeitig schlägt die Zentriervorrichtung 34 an der Führung 17 an. Zwischen den beiden Führungen 17 und 18 des Eckverbinders 14 ist eine angschrägte Flanke 19 vorgesehen. Diese steht in die Befestigungsaufnahme 35 der vertikalen Rahmenschenkel vor. Zwischen der Flanke 19 und der Bodenfläche der Befestigungsaufnahme 35 ist ein Freiraum gebildet. Mit diesem Freiraum ist sichergestellt, daß die vertikalen Rahmenschekel 30 stets nur mit ihren Zentriervorrichtungen 33, 34 an den Führungen 17, 18 anliegen. Hierdurch läßt sich die Montageeinheit exakt an der Bodeneinheit 10 ausrichten. Zur Fixierung ist die Montageeinheit mit der Bodeneinheit 10 verschraubt. Dazu sind in der Zeichnung nicht dargestellte Schraubaufnahmen in den Eckverbindern 14 und der Bodenfläche der Befestigungsaufnahme 35 der vertikalen Rahmenschenkel 30 vorgesehen. Durch diese können Befestigungsschrauben eingesteckt und mit einer Mutter gekontert werden oder in ein Gewinde des Eckverbinders 14 eingeschraubt. Es ist jedoch auch möglich, die vertikalen Rahmenschenkel 30 direkt mit der Bodeneinheit 10 und dem Eckverbinder 14 zu verschweißen.

Zusätzlich zu der Bodeneinheit 10 kann vorteilhafterweise eine baugleich ausgebildete Deckeinheit verwendet sein. Diese wird im oberen Bereich an die vertikalen Rahmenschenkel 30 angebunden. Mit weiteren vertikalen Rahmenschenkeln 30 kann dann das Rahmengestell komplettiert werden. Die Montageeinheit wird vorteilhafterweise an der Rückseite des Schaltschrankes angeordnet. Es ist jedoch auch möglich, die Montageeinheit an einer Seitenwand vorzusehen. Bei der Montageeinheit sind eine Vielzahl von Befestigungsmöglichkeiten gegeben. Insbesondere können die einander paarweise zugeordneten Profilseiten 32 bzw. die Zentriervorrichtungen 34 der vertikalen Rahmenschenkel 30 dazu verwendet werden, zwei zueinander parallel versetzte Montageebenen auszubilden. In der Zeichnung ist die erste Montageebene durch die Montageflächen 41 der Verbindungsstücke 40 teilweise gebildet. Solche versetzte Montageebenen lassen sich auch senkrecht zu der Montageeinheit im Rahmengestell verwirklichen. Hierzu werden die Befestigungsaufnahmen 37 der Profilseite 31 bzw. der Zentriervorrichtung 33 verwendet.

Um eine Verletzungsgefahr zu vermeiden, sind die Absätze 24 der Aufnahmen 20 mit einer Profilierung 21 versehen. Die Profilierung 21 ist hierbei an die Außengeometrie der vertikalen Rahmenschenkel 30 angepaßt. Damit stehen keine Kanten der Bodeneinheit 10 über die vertikalen Rahmenschenkel 30 vor. Soll die Montageeinheit dauerhaft mit der Bodeneinheit 10 verbunden werden, so kann auch entlang der Profilierung 21 eine Schweißnaht gesetzt sein.

## Patentansprüche

1. Schaltschrank mit einem Rahmengestell, das vertikale Rahmenschenkel (30) aufweist, wobei die vertikalen Rahmenschenkel (30) an eine Boden- bzw. Deckeinheit (10) angeschlossen sind,
dadurch gekennzeichnet,
daß zwei benachbarte vertikale Rahmenschenkel (30) mit Verbindungsstücken (40) zu einer separaten Montageeinheit verbunden und Einbauten hieran festlegbar sind.

2. Schaltschrank nach Anspruch 1,
dadurch gekennzeichnet,
daß die vertikalen Rahmenschenkel (30) Befestigungsaufnahmen (35) aufweisen, mittels derer sie über Eckverbinder (14) an die Boden- und/oder Deckeinheit (10) angeschlossen sind.

3. Schaltschrank nach Anspruch 1 oder 2,
dadurch gekennzeichnet,
daß die Verbindungsstücke (40) als Montageschienen ausgebildet sind,
daß die Montageschienen eine dem Innenraum des Rahmengestells zugekehrte Montagefläche (41) aufweisen,
daß an die Montagefläche (41) ein oder mehrere Seitenteile (42, 43) im Winkel angeschlossen sind, und
daß die Montagefläche (41) und die Seitenteile (42, 43) Reihen von Befestigungsaufnahmen (44a, 44b) aufweisen.

4. Schaltschrank nach einem der Ansprüche 1 bis 3,
dadurch gekennzeichnet,
daß die Boden- und/oder Deckeinheit (10) zur Außenseite des Rahmengestells offene Aufnahmen (20) hat, in die die aus vertikalen Rahmenschenkeln (30) und Verbindungsstücken (40) gebildete Einheit einsetzbar ist.

5. Schaltschrank nach Anspruch 4,
dadurch gekennzeichnet,
daß die Aufnahmen (20) im Eckbereich der Boden- und/oder Deckeinheit (10) angeordnet sind, und die Enden der vertikalen Rahmenschenkel (30) aufnehmen, daß die Aufnahmen (20) Anschläge (22, 23) aufweisen, die die Einsetzbewegung der vertikalen Rahmenschenkel (30) begrenzen, und
daß die Einsetzbewegung an Führungen (17, 18) der Boden-/Deckeinheit (10) und/oder der vertikalen Rahmenschenkel (30) geleitet ist.

6. Schaltschrank nach Anspruch 4 oder 5,
dadurch gekennzeichnet,
daß von der Boden- und/oder Deckeinheit (10) ein Vorsprung (24) gebildet ist, der die Stirnseite (36) der vertikalen Rahmenschenkel (30) zumindest teilweise überdeckt.

7. Schaltschrank nach einem der Ansprüche 1 bis 6,
dadurch gekennzeichnet,
daß die vertikalen Rahmenschenkel (30) eine dem Innenraum des Rahmengestells zugekehrte, in Längsrichtung verlaufende Nut aufweisen,
daß in der Nut der Eckverbinder (14) aufgenommen ist, und
daß die vertikalen Rahmenschenkel (30) mit den Eckverbindern (14) lösbar oder unlösbar verbindbar sind.

8. Schaltschrank nach einem der Ansprüche 1 bis 8,
dadurch gekennzeichnet,
daß die Boden- und/oder Deckeinheit (10) mittels Schraubverbindungen an die vertikalen Rahmenschenkel (30) angeschlossen sind.

9. Schaltschrank nach einem der Ansprüche 1 bis 8,
dadurch gekennzeichnet,
daß die Montageeinheit ein oder mehrere Verkleidungselemente zur Abdeckung der rückwärtigen Seite der Montageeinheit bzw. des Innenraumes des Gestellrahmens trägt.

10. Schaltschrank nach einem der Ansprüche 1 bis 9,
dadurch gekennzeichnet,
daß die vertikalen Rahmenschenkel (30) paarweise einander zugeordnete Profilseiten (32-32 und 34-34) aufweisen, mit denen zwei oder mehrere, zueinander parallele Montagebenen ausgebildet sind.

## Claims

1. Switchgear cabinet, having a framework which has vertical frame members (30), the vertical frame members (30) communicating with a bottom or respectively top unit (10), characterised in that two adjacent vertical frame members (30) are connected to connection pieces (40) to form a separate assembly unit, and components are securable thereon.

2. Switchgear cabinet according to claim 1, characterised in that the vertical frame members (30) have mounting recesses (35), by means of which they communicate with the bottom and/or top unit (10) via corner connectors (14).

3. Switchgear cabinet according to claim 1 or 2, characterised in that the connection pieces (40) are configured as mounting rails, in that the mounting rails have a mounting face (41) facing the interior of the framework, in that one or more lateral portions (42, 43) communicate with the mounting face (41) at an angle, and in that the mounting face (41) and the lateral portions (42, 43) have rows of mounting recesses (44a, 44b).

4. Switchgear cabinet according to one of claims 1 to 3, characterised in that the bottom and/or top unit (10) has receivers (20), which are open towards the outside of the framework, and into which receivers is insertable the unit which is formed from vertical frame members (30) and connection pieces (40).

5. Switchgear cabinet according to claim 4, characterised in that the receivers (20) are disposed in the corner region of the bottom and/or top unit (10) and accommodate the ends of the vertical frame members (30), in that the receivers (20) have stop members (22, 23), which define the insert movement of the vertical frame members (30), and in that the insert movement is conducted along guide members (17, 18) of the bottom/top unit (10) and/or of the vertical frame members (30).

6. Switchgear cabinet according to claim 4 or 5, characterised in that a projection (24) is formed by the bottom and/or top unit (10) and at least partially covers the end face (36) of the vertical frame members (30).

7. Switchgear cabinet according to one of claims 1 to 6, characterised in that the vertical frame members (30) have a groove which faces the interior of the framework and extends in the longitudinal direction, in that the corner connector (14) is accommodated in the groove, and in that the vertical frame members (30) are detachably or non-detachably connectable to the corner connectors (14).

8. Switchgear cabinet according to one of claims 1 to 7, characterised in that the bottom and/or top unit (10) communicates with the vertical frame members (30) by means of screw connections.

9. Switchgear cabinet according to one of claims 1 to 8, characterised in that the assembly unit carries one or more covering elements to cover the rear side of the assembly unit, or respectively of the interior of the framework.

10. Switchgear cabinet according to one of claims 1 to 9, characterised in that the vertical frame members (30) have profile sides (32-32 and 34-34), which are associated with one another in pairs, and by means of which two or more mounting planes, which are parallel to one another, are provided.

## Revendications

1. Armoire de distribution avec une ossature d'encadrement qui présente des montants d'encadrement verticaux (30), où les montants d'encadrement verticaux (30) sont raccordés à une unité de base ou à une unité de couvercle (10),
caractérisée
en ce que deux montants d'encadrement voisins (30) sont au moyen de pièces de liaison (40) reliés pour constituer une unité de montage individuelle à laquelle peuvent être fixés des appareillages.

2. Armoire de distribution suivant la revendication 1,
caractérisée
en ce que les montants d'encadrement verticaux (30) présentent des logements de fixation (35) à l'aide desquels ils sont raccordés par l'intermédiaire de connecteurs d'angle (14) à l'unité de base (10) et/ou à l'unité de couvercle.

3. Armoire de distribution suivant la revendication 1 ou 2,
caractérisée
en ce que les pièces de liaison (40) ont la forme de rails de montage,
en ce que les rails de montage présentent une surface de montage (41) tournée vers l'enceinte intérieure de l'ossature d'encadrement,
en ce qu'à la surface de montage (41) sont raccordées suivant un angle une ou plusieurs pièces latérales (42, 43), et
en ce que la surface de montage (41) et les pièces latérales (42, 43) présentent des rangées de logements de fixation (44a, 44b).

4. Armoire de distribution suivant l'une quelconque des revendications de 1 à 3,
caractérisée
en ce que l'unité de base (10) et/ou l'unité de couvercle présente des logements ouverts en direction de la face extérieure de l'ossature d'encadrement, logements dans lesquels peut être montée l'unité de montage constituée de montants d'encadrement verticaux (30) et de pièces de liaison (40).

5. Armoire de distribution suivant la revendication 4,
caractérisée
en ce que les logements (20) sont disposés dans la zone d'angle de l'unité de base (10) ou de l'unité de couvercle, et reçoivent les extrémités des montants d'encadrement verticaux (30),
en ce que les logements (20) présentent des butées (22, 23) qui limitent la course d'engagement des montants d'encadrement verticaux (30), et
en ce que la course d'engagement est guidée par des guidages (17, 18) de l'unité de base (10) ou l'unité de couvercle et/ou des montants d'encadrement verticaux (30).

6. Armoire de distribution suivant la revendication 4 ou 5,
caractérisée
en ce que l'unité de base (10) et/ou de couvercle présente une protubérance (24) qui recouvre tout au moins partiellement la face frontale (36) des montants d'encadrement verticaux (30).

7. Armoire de distribution suivant l'une quelconque des revendications de 1 à 6,
caractérisée
en ce que les montants d'encadrement verticaux (30) présentent une rainure de direction longitudinale tournée vers l'enceinte intérieure de l'ossature d'encadrement,
en ce que le connecteur d'angle (14) est reçu dans la rainure, et
en ce que les montants d'encadrement verticaux (30) peuvent être reliés de manière amovible ou inamovible aux connecteurs d'angle (14).

8. Armoire de distribution suivant l'une quelconque des revendications de 1 à 7,
caractérisée
en ce que l'unité de base (10) et/ou l'unité de couvercle sont au moyen d'assemblages à vis raccordées aux montants d'encadrement verticaux (30).

9. Armoire de distribution suivant l'une quelconque des revendications de 1 à 8,
caractérisée
en ce que l'unité de montage porte un ou plusieurs éléments d'habillage pour le recouvrement de la face arrière de l'unité de montage ou de l'enceinte intérieure de l'ossature d'encadrement.

10. Armoire de distribution suivant l'une quelconque des revendications de 1 à 9,
caractérisée
en ce que les montants d'encadrement verticaux (30) présentent par paires des ailes de profilé (32-32 et 34-34) mutuellement associées, donnant naissance à deux ou plusieurs plans de montage mutuellement parallèles.
